# EUROPEAN PATENT APPLICATION

(11) **EP 3 604 908 A1**
(43) Date of publication of application: **05.02.2020**
(21) Application number: 17901599.5
(22) Date of filing: 11.07.2017
(51) Int. Cl.: F21V 8/00, G02B 5/02, B60R 1/06

(54) **BACKLIGHT UNIT**

(30) Priority: 23.03.2017 KR 20170036767
(71) Applicant: Meekyungtec Co., Ltd, Suwon-si, Gyeonggi-do 16648 (KR)
(72) Inventor: OH, Se Been, Goyang-si Gyeonggi-do 10375 (KR); YOUNG, Seung Zu, Ansan-si Gyeonggi-do 15315 (KR)
(74) Representative: Maiwald Patent- und Rechtsanwaltsgesellschaft mbH
(86) International application number: PCT/KR2017/007384
(87) International publication number: WO 2018/174343

(57) **Abstract**

The present invention relates to a backlight unit for an outside mirror of a vehicle, wherein the backlight unit can comprise: a light source unit having at least one light source; and an optical processing unit having at least one optical passage through which light emitted from the light source passes while being spread, and a reflective surface which reflects light which has passed through the optical passage.

## Description

### Technical Field

The present disclosure relates to a backlight unit for an outside mirror of a vehicle.

### Background Art

The BSD (Blind Spot Detection) system refers to a warning system that detects a vehicle located in a blind spot at the side rear of an ego vehicle during driving and provides the detection information to a driver. Such a BSD system includes a backlight unit installed in an outside mirror of the vehicle, and the backlight unit is attached to the rear surface of glass on which an indicator icon is etched.

The related art of such a backlight unit is described with reference to Korean Patent No. 10-1526792 published on June 5, 2015.

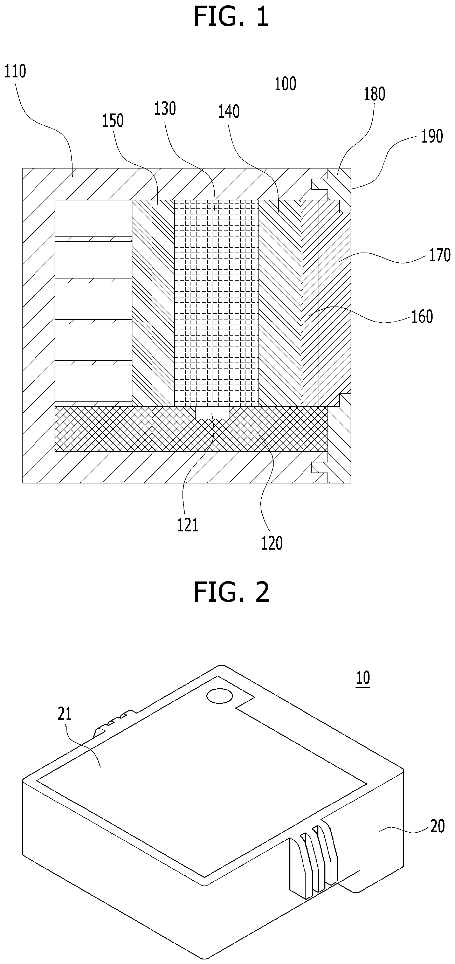

FIG. 1 is a cross-sectional view of a conventional backlight unit. Referring to FIG. 1, the conventional backlight unit 100 includes a bottom case 110, an LED (Light Emitting Diode) 121 mounted on a PCB (Printed Circuit Board), a light source unit 120 disposed at the inside bottom of the bottom case 110, a light guide panel 130 disposed at the inside top of the bottom case 110, a reflecting plate 150 disposed at the rear of the light guide panel 130, a prism plate 140 disposed at the front of the light guide panel 130, a diffuser sheet 160 disposed at the front of the prism plate 140, and a top case 180 fastened to the bottom case 110.

According to the conventional backlight unit 100 having the above-described structure, light from the LED 121 is scattered in the entire region of the light guide panel 130, and then uniformly emitted toward a front surface. However, while the light from the LED 121 is scattered across the entire region of the light guide panel 130 made of a solid medium, a significant optical loss occurs. Therefore, the luminance of the light emitted from the backlight unit 100 to the front surface is considerably lowered. As a result, the visibility of an indicator icon may be significantly degraded. Thus, the backlight unit 100 may not sufficiently exhibit its primary function.

Korean Utility Model Application Publication No. 20-2014-0001114 (published on February 20, 2014) discloses a technique related to a non-reflective direct method for directly emitting light toward an indicator icon, and Korean Patent Publication No. 10-1637331 (published on July 7, 2016) discloses a technique related to a rear reflection method for emitting light onto a rear reflecting surface and illuminating an indicator icon using the reflected light. According to such conventional backlight units, it is very difficult to implement favorable uniformity of light due to light concentration.

Therefore, there is an urgent need for a backlight unit capable of achieving favorable luminance and uniformity of light emitted toward an indicator icon.

### DISCLOSURE

### Technical Problem

The present disclosure has been proposed to solve the above problems and various embodiments are directed to a backlight unit capable of achieving favorable luminance and uniformity of light emitted onto a front surface.

### Technical Solution

In an embodiment, a backlight unit may include: a light source unit having one or more light sources; and a light treatment unit having one or more light paths through which light emitted from the light source passes while dispersed, and a reflecting surface for reflecting the light having passed through the light path.

The reflecting surface may be configured to form an obtuse angle with respect to the longitudinal direction of the light path.

The reflecting surface may be formed as at least one of a flat surface, a convex curved surface and a concave curved surface.

The light path may have a reflective coating layer formed on the surface thereof.

In another embodiment, an outside mirror for a vehicle may include the backlight unit, and the reflecting surface is tilted toward a driver seat of the vehicle.

### Advantageous Effects

In accordance with the present embodiment, the backlight unit can achieve favorable luminance and uniformity of light emitted onto the front surface.

### Brief Description of Drawings

FIG. 1 is a cross-sectional view of a conventional backlight unit.
FIG. 2 is a perspective view of a backlight unit in accordance with an embodiment of the present disclosure.
FIG. 3 is an exploded perspective view of the backlight unit in accordance with the embodiment of the present disclosure.
FIG. 4 is a perspective view of a light treatment unit of the backlight unit in accordance with the embodiment of the present disclosure.
FIG. 5 is a side view illustrating an embodiment of the light treatment unit illustrated in FIG. 4.
FIG. 6 is a side view illustrating another embodiment of the light treatment unit illustrated in FIG. 4.
FIG. 7 is a side view illustrating still another embodiment of the light treatment unit illustrated in FIG. 4.

### DETAILED DESCRIPTION

The purposes, features and advantages of the present disclosure will be clarified through the following detailed descriptions with reference to the accompanying drawings. Therefore, the technical idea of the present disclosure will be easily carried out by those skilled in the art to which the present disclosure pertains. Furthermore, detailed descriptions related to publicly known functions or configurations will be omitted in order not to unnecessarily obscure subject matters of the present disclosure.

Throughout the specification, when one element is referred to as being "connected to" or "coupled to" another element, it may not only indicate that the former element is directly connected or coupled to the latter element, but also indicate that another element is interposed therebetween. Furthermore, when an element "includes" or "has" a component, it may indicate that the element does not exclude another component unless referred to the contrary, but can further include another component. In addition, the terms of a singular form may include plural forms unless referred to the contrary.

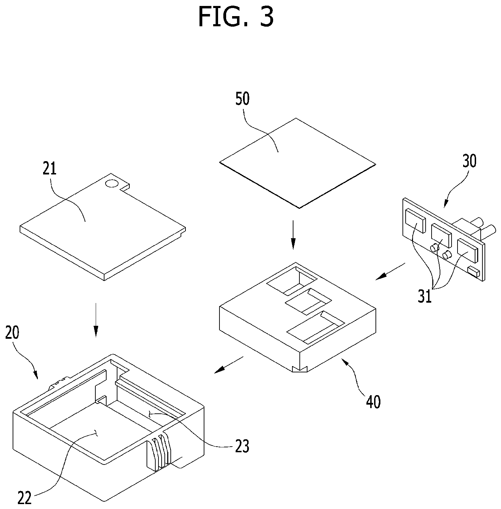

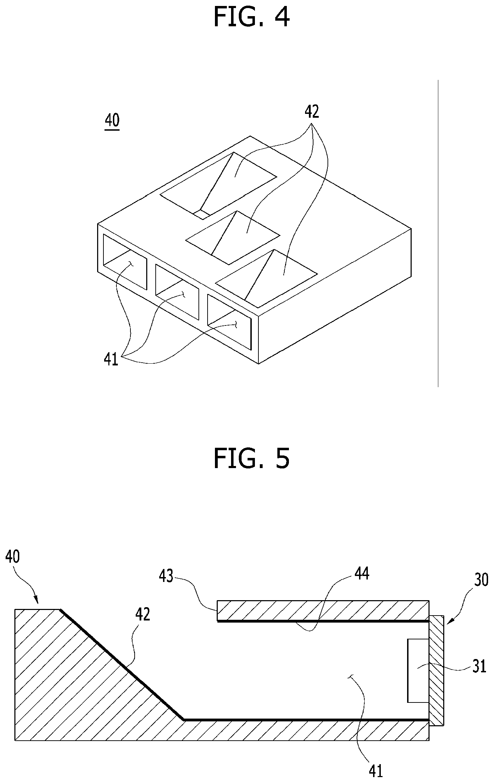

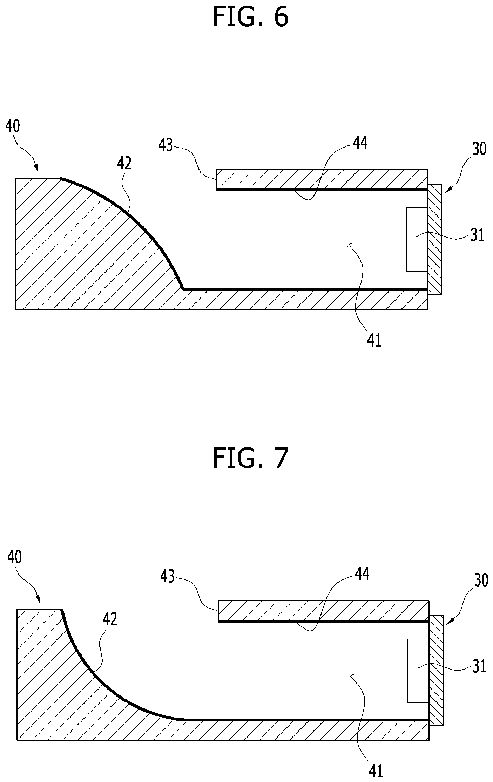

Hereinafter, a backlight unit in accordance with an embodiment of the present disclosure will be described with reference to FIGS. 2 to 7. FIG. 2 is a perspective view of a backlight unit in accordance with an embodiment of the present disclosure, FIG. 3 is an exploded perspective view of the backlight unit in accordance with the embodiment of the present disclosure, FIG. 4 is a perspective view of a case(a light treatment unit) of the backlight unit in accordance with the embodiment of the present disclosure, FIG. 5 is a side view illustrating an embodiment of the case illustrated in FIG. 4, FIG. 6 is a side view illustrating another embodiment of the case illustrated in FIG. 4, and FIG. 7 is a side view illustrating still another embodiment of the case illustrated in FIG. 4.

Referring to FIGS. 2 and 3, the backlight unit 10 in accordance with the embodiment of the present disclosure may include a housing 20, a light source unit 30 and a light treatment unit 40.

Specifically, the housing 20, which is a rectangular parallelepiped component having an internal space 22 for receiving the parts therein, may have a transparent or white window 21 and a side opening 23. The window 21 may be formed at a front surface of the housing 20 through double-shot injection molding, and the side opening 23 may be formed on one side of the housing 20 such that the parts are inserted through the side opening 23.

The light source unit 30 may be configured to include one or more LEDs (hereinafter, referred to as 'light source') 31 mounted on a PCB, and mounted in the housing 20. When power is supplied, the light source unit 30 may emit light in a direction parallel to a light path 41 of the light treatment unit 40 which will be described below. However, the light source 31 in accordance with the embodiment of the present disclosure is not limited to an LED, but another type of light source capable of exhibiting the same function as the LED may be used.

Referring to FIGS. 4 and 5, the light treatment unit 40 may include one or more light paths 41 and one or more reflecting surfaces 42. Specifically, the light path 41 may have a cross-section formed in various shapes including a rectangle, a circle and the like, as a light path having a predetermined length to pass light emitted from the light source 31. As the light emitted from the light source 31 is uniformly dispersed while passing through the light path 41, the uniformity of the light may be significantly improved across the entire cross-section of the light path 41. Furthermore, a reflective coating layer 44 may be formed on the surface of the light path 41, in order to minimize a light loss.

The reflecting surface 42 may serve to reflect the light having passed through the light path 41 such that the reflected light is emitted through one or more front openings 43 of the light treatment unit 40. The reflecting surface 42 may be configured to form an obtuse angle with respect to the length direction of the light path 41. FIG. 5 illustrates that the reflecting surface 42 is formed as a flat surface. However, the present disclosure is not limited thereto, but the reflecting surface 42 may be formed as a convex curved surface (see FIG. 6) or a concave curved surface (see FIG. 7) as illustrated in FIGS. 6 and 7. In order that light emitted from the backlight unit 10 mounted in an outside mirror of a vehicle can be emitted within a driver's viewing angle, the reflecting surface 42 may be tilted toward a driver seat of the vehicle.

The backlight unit 10 may further include a diffuser plate 50 which is positioned on the front surface of the light treatment unit 40 having the front opening 42 formed therein, and implement more uniform brightness and color through the diffuser plate 50. However, the diffuser plate 50 is not a necessary component which is required for constituting the backlight unit 10.

The backlight unit 10 in accordance with the embodiment of the present disclosure can achieve favorable luminance and uniformity of light emitted toward the front surface. In particular, compared to the conventional backlight unit 100 whose luminance is significantly reduced as a significant light loss occurs while light is scattered across the entire region of the light guide panel 130 made of a solid medium, the backlight unit 10 in accordance with the embodiment of the present disclosure can uniformly disperse light through the light path 41 formed of a gaseous medium such as air. Therefore, the luminance of the light can be significantly increased to improve the visibility of an indicator icon not only in the nighttime but also in the daytime.

Furthermore, according to the conventional backlight unit which employs the non-reflective direct method for directly emitting light toward an indicator icon or the rear reflection method for emitting light onto the rear reflecting surface and illuminating an indicator icon using the reflected light, it is very difficult to implement favorable uniformity of light due to light concentration. However, the backlight unit 10 in accordance with the embodiment of the present disclosure may include the light treatment unit 40 having the light path 41 for uniformly dispersing light, and thus ensure favorable uniformity of light. Thus, the visibility of the indicator icon can be significantly improved.

While various embodiments have been described above, it will be understood to those skilled in the art that the embodiments described are by way of example only. Accordingly, the disclosure described herein should not be limited based on the described embodiments.

## Claims

1. A backlight unit 10 comprising:
a light source unit 30 having one or more light sources 31; and
a light treatment unit 40 having one or more light paths 41 through which light emitted from the light source 31 passes while dispersed, and a reflecting surface 42 for reflecting the light having passed through the light path 41.

2. The backlight unit 10 of claim 1, wherein the reflecting surface 42 is configured to form an obtuse angle with respect to the longitudinal direction of the light path 41.

3. The backlight unit 10 of claim 1 or 2, wherein the reflecting surface 42 is formed as at least one of a flat surface, a convex curved surface and a concave curved surface.

4. The backlight unit 10 of claim 1 or 2, wherein the light path 41 has a reflective coating layer 44 formed on the surface thereof.

5. An outside mirror for a vehicle, comprising the backlight unit 10 of claim 1 or 2.

6. The outside mirror of claim 5, wherein the reflecting surface 42 is tilted toward a driver seat of the vehicle.
